# EUROPEAN PATENT APPLICATION

(11) **EP 2 133 810 A2**
(43) Date of publication of application: **16.12.2009**
(21) Application number: 09162276.1
(22) Date of filing: 09.06.2009
(51) Int. Cl.: G06F 21/04

(54) **Computer input device, method for inputting data to a computer, computing apparatus and computer software product**

(30) Priority: 10.06.2008 IL 19204308
(71) Applicant: Human Interface Security Ltd., 48091 Rosh Ha'ayin (IL)
(72) Inventor: Frenkel, Lior, Gadera (IL); Zilberstein, Amir, 99793 Yad Rambam (IL)
(74) Representative: Freeman, Avi

(57) **Abstract**

A computer input device (30) for operation with a computer (26), includes an input transducer (32), which is coupled to receive an input from a user and to generate a data signal responsively to the input. An encryption processor (46) is coupled to process the data signal so as to output data to the computer. The encryption processor has a first operational mode in which the encryption processor encrypts the data signal using an encryption key not accessible to the computer so that the data are unintelligible to the computer, and a second operational mode in which the data are intelligible to the computer. A mode switch (34) is operative so as to switch between the first and second operational modes of the encryption processor. An output transducer (36) is coupled to provide to the user an indication of whether the encryption processor is in the first or the second operational mode.

## Description

The present invention relates to a computer input device, a method for inputting data to a computer, computing apparatus and a computer software product.

In embodiments the present invention relates generally to data security, and specifically to methods and devices for preventing unauthorized parties from accessing unencrypted data.

Data encryption is widely used in preventing unauthorized access to data. Various methods of data encryption are known in the art. In general, these methods use a key to convert data to a form that is unintelligible to a reader (human or machine), and require an appropriate key in order to decrypt the data. Symmetric encryption methods use the same key for both encryption and decryption. Such symmetric methods include the well-known DES (Data Encryption Standard) and AES (Advanced Encryption Standard) algorithms. In asymmetric encryption methods, such as the RSA (Rivest Shamir Adelman) algorithm, a computer that is to receive encrypted data generates complementary public and private keys and transmits the public key to the sender. After the sender has encrypted the data using the public key, only the holder of the private key can decrypt it.

Modem methods of encryption make it very difficult for a malicious party who intercepts an encrypted message to decrypt the message contents. On the other hand, within the computer that sends the message, the message contents are typically held, at least temporarily, in clear (unencrypted) form in computer memory or storage. A malicious party who gains access to the memory or CPU of the computer (using a "Trojan horse" or other "spyware" program, for example) may be able to intercept the message in its internal clear form and read out or otherwise tamper with secret message contents (including user passwords and other sensitive private information). As additional examples, the malicious party may use a key-logger to copy and transmit a record of keystrokes input to the computer from the keyboard, or may use "phishing" in an attempt to trick the user into providing private information.

Embodiments of the present invention provide methods and apparatus for encryption that can be used to prevent unauthorized parties from accessing unencrypted secret data on the receiving computer. In these embodiments, a computer input device comprises an encryption processor, which is coupled between an input transducer, such as a keyboard, microphone, touch screen or camera, and the computer. The encryption processor receives and encrypts input data signals from the input transducer so that the data that are input to the computer from the input device are already encrypted. The input device comprises a mode switch, which switches between an encrypted mode for secret data, in which the data that have been input by the user are unintelligible to the computer, and a clear (unencrypted) mode, for normal (non-secure) data input. The computer may then transmit and/or store the encrypted input data from the input device without ever having to decrypt the data. Thus, even if an unauthorized party were to gain access to the computer, he or she would still be unable to read out the secret data in clear form.

In some embodiments, the computer input device also comprises an output transducer, such as a lamp, alphanumeric display or audio generator, which indicates to the user whether the input device is operating in encrypted or clear mode. Software running on the computer (whether on the CPU or on an embedded processor within the input device) may monitor the user input in order to detect unencrypted input of secret data to the computer. Upon detecting such input, the software initiates preventive action, such as prompting the user to flip the mode switch and re-enter the data, or preventing any further unencrypted data from being sent to the computer. By forcing the user to observe the status of the output transducer and re-enter data in this manner, the agent trains the user to make appropriate use of the encryption capabilities of the input device, so that the user will remember to flip the mode switch to encrypted mode even if the agent is later disabled (whether accidentally or intentionally).

According to a first aspect of the present invention, there is provided a computer input device for operation with a computer, including an input transducer, which is coupled to receive an input from a user and to generate a data signal responsively to the input; an encryption processor, which is coupled to process the data signal so as to output data to the computer, and which has a first operational mode in which the encryption processor encrypts the data signal using an encryption key not accessible to the computer so that the data are unintelligible to the computer, and a second operational mode in which the data are intelligible to the computer; a mode switch, which is operative so as to switch between the first and second operational modes of the encryption processor; and an output transducer, which is coupled to provide to the user an indication of whether the encryption processor is in the first or the second operational mode.

In one embodiment, the input transducer includes a text input device, such as a keyboard. The mode switch may by manually operable by a user. In a disclosed embodiment, the data signal is not accessible to the computer except in the data output by the encryption processor.

The output transducer may include a lamp, an alphanumeric display, or an audio transducer, or may cause a visible mode change in the input device.

In accordance with a second aspect of the present invention, there is provided a method for inputting data to a computer, including receiving a data signal from an input transducer responsively to an input by a user; processing the data signal so as to generate data for output to the computer using an encryption processor, which has a first operational mode in which the encryption processor encrypts the data signal using an encryption key not accessible to the computer so that the data are unintelligible to the computer, and a second operational mode in which the data are intelligible to the computer; setting a mode switch so as to select one of the first and second operational modes; presenting to the user an indication of whether the encryption processor is in the first or the second operational mode; and outputting the data to the computer in accordance with the selected one of the operational modes.

In accordance with a third aspect of the present invention, there is provided a method for inputting data to a computer, including receiving data input to the computer from an input device operated by a user, the input device having a first user-selectable operational mode in which the input device encrypts the data input and a second user-selectable operational mode in which the data input is unencrypted; detecting that the data input made to the computer by the user via the input device for entry in a secret data field is unencrypted; and initiating a preventive action responsively to detecting that the data input is unencrypted.

In one embodiment, initiating the preventive action includes preventing further unencrypted data from being sent from the input device to the computer.

In another embodiment, initiating the preventive action includes issuing an alert from the computer to the user, wherein issuing the alert includes instructing the user to switch the input device from the second to the first operational mode and repeat the data input. The computer may not alert the user to switch the input device to the first operational mode until the unencrypted data input is detected.

In accordance with a fourth aspect of the present invention, there is provided computing apparatus, including an input device having a first user-selectable operational mode in which the input device encrypts data input made to the device by the user and a second user-selectable operational mode in which the data input is unencrypted; and a computer, which is coupled to receive the data input from the input device, and is configured to detect that the data input made by the user for entry in a secret data field is unencrypted, and to initiate a preventive action responsively to detecting that the data input is unencrypted.

In accordance with a fifth aspect of the present invention, there is provided a computer software product, including a computer-readable medium, e.g. a tangible computer-readable medium, in which program instructions are stored, which instructions, when read by a computer, cause the computer to receive data input to the computer from an input device operated by a user, the input device having a first user-selectable operational mode in which the input device encrypts the data input and a second user-selectable operational mode in which the data input is unencrypted, and to detect that the data input made to the computer by the user via the input device for entry in a secret data field is unencrypted, and to initiate a preventive action responsively to detecting that the data input is unencrypted.

The present invention will be more fully understood from the following detailed description of the embodiments thereof, taken together with the drawings.

Examples of embodiments of the present invention will now be described in detail with reference to the accompanying drawings, in which:
Fig. 1 is a schematic, pictorial illustration of a system for transmission and reception of encrypted data, in accordance with an embodiment of the present invention;
Fig. 2 is a block diagram that schematically shows details of an input device for use with a computer, in accordance with an embodiment of the present invention; and
Fig. 3 is a flow chart that schematically illustrates a method for inputting encrypted data to a computer, in accordance with an embodiment of the present invention.

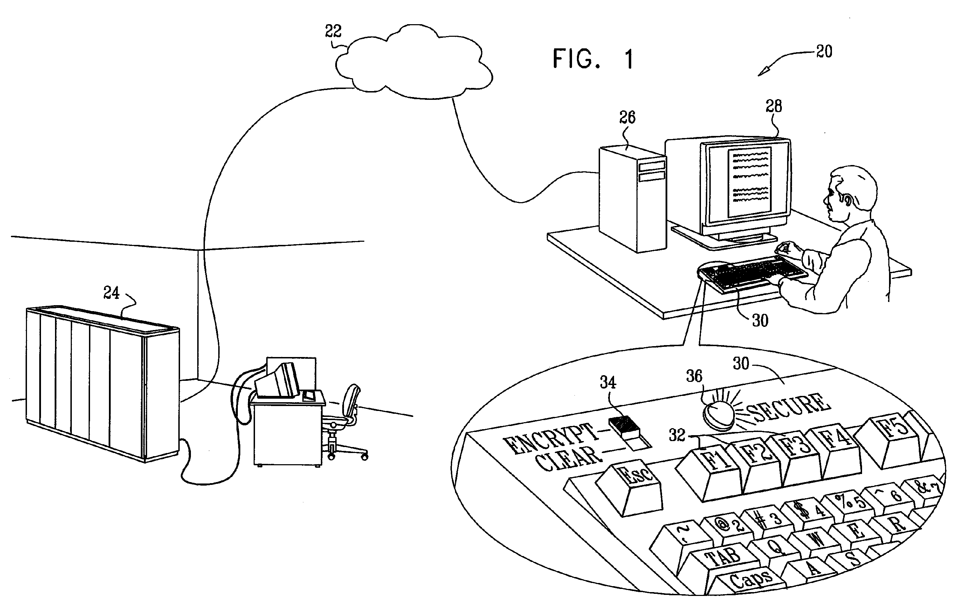

Fig. 1 is a schematic, pictorial illustration of a system for transmission and reception of encrypted data, in accordance with an embodiment of the present invention. A source computer 20 transmits encrypted data over a network 22 to a receiving computer 24. The data may be encrypted in accordance with any suitable method of encryption that is known in the art, including both symmetric and asymmetric methods. Network 22 may comprise the Internet or substantially any other public or private computer network.

Computer 20 comprises a console 26, which is coupled to one or more output devices, such as a video display screen 28, and one or more user input devices, which may comprise, for example, text, image capture and/or audio input transducers. In the present embodiment, the text input device is a keyboard 30, which comprises keys 32 as input transducers, and has novel encryption features that are described hereinbelow. Alternatively or additionally, the encryption capabilities of keyboard 30 may be incorporated into other user input devices, such as a mouse or other pointing device, a camera, scanner or other imaging device, a microphone, or a touch-sensitive screen, as well as other types of input devices that are known in the art. In the description that follows, certain techniques for secure input of encrypted data to console 26 are described, by way of example, with reference to keyboard 30. These techniques may similarly be applied, mutatis mutandis, to input devices of other types.

Keyboard 30 has two modes of operation:
1. An encrypted mode, in which signals generated by strokes of keys 32 are encrypted using an encryption key that is not accessible to console 26; and
2. A clear mode, in which the encryption function of the keyboard is turned off or bypassed, so that the output data from the keyboard are intelligible to the console, typically in the standard keyboard data output format.

A user-operable switch 34 permits the user to toggle between the two modes. The switch may simply be a manual switch on the keyboard package, as shown in Fig. 1, so that even if a hacker gains access to console 26 remotely (via network 22, for example), the hacker will be unable to change the switch setting. Alternatively, any other suitable type of switch that is known in the art may be used in this manner, including an electronic or logic-actuated switch, which may be actuated by a certain combination and/or sequence of user keystrokes on keys 32. Alternatively or additionally, in some embodiments the keyboard may switch modes automatically under the control of software or other suitable logic.

A light-emitting diode (LED) 36 serves as an output transducer for indicating the current operating mode of keyboard 30. In this example, LED 36 lights to indicate that the keyboard is operating in encrypted mode. Alternatively, any other suitable type of output transducer may be used for this purpose, such as another type of lamp; an alphanumeric display, such as a liquid crystal display (LCD); another type of visual transducer such as a backlight, which causes a visible mode change in the input device; or even an audio transducer, which generates a sound to indicate the operating mode. The output transducer is typically controlled internally within the keyboard to prevent tampering by hackers.

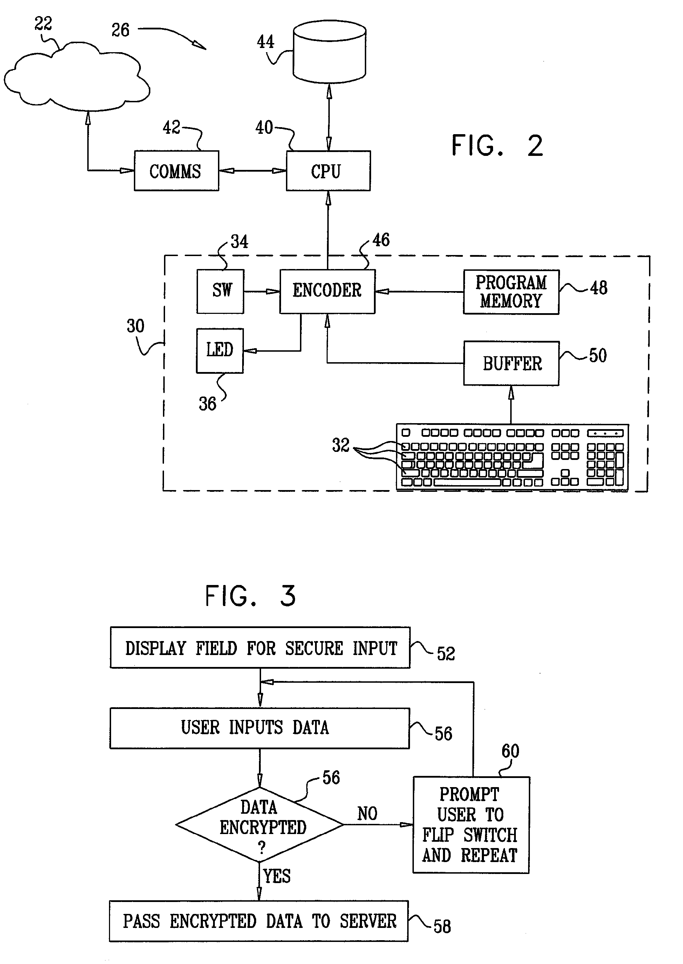

Fig. 2 is a block diagram that schematically shows details of console 26 and keyboard 30, in accordance with an embodiment of the present invention. Console 26 comprises a central processing unit (CPU) 40, which performs general computing functions. CPU 40 is coupled via a communication interface 42 to transmit and receive data to and from network 22. The console comprises a memory 44 (which may typically comprise both RAM and disk memory), which is accessed by the CPU in a conventional manner. In scenarios that are known in the art, when computer 20 is to transmit data to remote computer 24, even if the transmission itself is encrypted, the data is typically held in clear form in memory 44 at least temporarily in preparation for encryption. As a result, if a malicious party is able to gain access to the memory through a software security breach, for example, that party may be able to read the decrypted data (generally by causing CPU 40 or another component of terminal 20 to transmit the decrypted data over network 22), notwithstanding the strength of the encryption that will be applied by the CPU when transmitting the data to computer 24.

To avoid this sort of scenario in the present embodiment, an encryption processor 46 associated with keyboard 30 encrypts data entered by the user via keys 32 when the encrypted mode is selected by switch 34. Keys 32 generate respective data signals when depressed by the user, as is known in the art. These data signals are digitized and, optionally, held in a buffer 50. The digitized data signals are then encoded by encryption processor 46, using an appropriate encryption key and program instructions stored in a program memory 48. The encryption processor may comprise a programmable processing device, such as a microprocessor or field-programmable gate array (FPGA), or it may alternatively comprise a hard-coded logic device.

In the embodiment shown in Fig. 2, encryption processor 46 is integrated with keyboard 30, typically within the keyboard package. Alternatively, the encryption processor may be packaged separately from the keyboard. For example, the encryption processor, along with switch 34, LED 36 and memory 48, may be packaged in a plug-in device (not shown in the figures), which has appropriate input and output connectors for coupling between a conventional keyboard and the keyboard input to console 26. The encryption function of processor 46 may be engaged or bypassed depending on the setting of the switch. Functionally, the combination of a conventional keyboard with this sort of plug-in device constitutes an input device with equivalent capabilities to those of the integrated keyboard of Figs. 1 and 2.

In normal operation, the user maintains switch 34 in the clear position, so that the user can interact with computer 20 via keyboard 30 in the conventional manner. From time to time, however, the user may toggle switch 34 to the encryption mode, whereupon encryption processor 46 will output encrypted data to CPU 40. The CPU in this case is unable to decipher the encrypted data (and cannot access the unencrypted data signals in the keyboard). Rather, the CPU stores the encrypted data in memory 44 or transmits the encrypted data via communication interface 42 in accordance with instructions received by the CPU.

For example, in a secure communication session between computer 20 and remote computer 24, the user of computer 20 may flip switch 34 to the encryption mode position before inputting some particularly sensitive item of information, such as a password or account number. Software running on computer 20 may cause CPU 40 to generate a data packet for transmission to computer 24, and to insert the encrypted data that were entered via keyboard 30 into the payload of the packet before transmission. Computer 24 holds the necessary key to decrypt the payload upon reception, but CPU 40 does not have access to the key. Therefore, even if a hacker were to gain control over the CPU and copy the data transmitted to computer 24, the hacker will still have no way of deciphering the encrypted payload data.

Fig. 3 is a flow chart that schematically illustrates a method for inputting encrypted data to computer 20 using keyboard 30, in accordance with an embodiment of the present invention. The purpose of this method is to ensure that the user of computer 20 actuates switch 34 at the appropriate times, so that secret data are input to the computer from the keyboard only in encrypted form. ("Secret data" in this context does not necessarily include all confidential data that the user may input, but rather those items of confidential data that are to be encrypted by the keyboard in order to protect against security breaches that may occur within the computer, as explained above.) The method described hereinbelow is meant to train the user, by negative reinforcement, to flip switch 34 before entering secret data, even without active prompting by the computer.

The method of Fig. 3 is typically carried out by a software agent running on computer 20. The agent monitors interaction between the user and the computer in order to identify data fields requiring encrypted input and to track user input to these fields. The term "agent" is used here, for convenience and clarity, to refer to the software that performs the functions of monitoring and training that are described herein, and should be understood broadly to mean any sort of software that is capable of causing computer 20 to carry out these functions. The software for this purpose may be downloaded to computer 20 in electronic form, over network 22, for example. Alternatively or additionally, the software may be provide and/or stored on tangible media, such as optical, magnetic or electronic memory media. The software may run either on CPU 40 or on an embedded processor in the input device (such as processor 46 in keyboard 30), or on the CPU and embedded processor in collaboration.

The method carried out by the software agent trains the user to engage the encryption capabilities of keyboard 30 in such a way that even if the software agent is later deactivated or removed from the computer entirely (whether intentionally or accidentally), the user will already have acquired the habit of flipping the encryption switch at the appropriate times without further prompting.

In an example scenario, the software agent may monitor interaction between the user of computer 20 and the Web site of a bank where the user has an account. (In this example, remote computer 24 may be the bank's server.) In the course of this interaction, computer 20 presents a field on display 28 that requires secret data to be input securely, at an input display step 52. The secret data may comprise a password, for instance. Standing instructions from the bank indicate that the user is required to flip switch 34 to the encrypted mode before typing in the secret data.

The user begins to input the secret data, at a data input step 54. The software agent checks the steam of input data, at an encryption checking step 56. If possible, this step is carried out on the fly, as the user inputs the data, rather than waiting for all of the data to be transferred to memory 44. As long as the input data are encrypted, the agent takes no action. In this case, the encrypted data are typically transferred temporarily to memory 44 and are then transmitted by CPU 40 to computer 24 at the appropriate time (such as when the user presses the "ENTER" key), at a data transfer step 58. Alternatively, the encrypted data may be stored on computer 20 or otherwise output as required by the application.

On the other hand, if the software agent detects at step 56 that the incoming data are not encrypted, the agent takes preventive action. As one example, the agent may issue an alert to the user, at a user prompt step 60. For example, the agent may cause a warning to appear on display 28, prompting the user to flip switch 34 and repeat the data input. Alternatively or additionally, the agent may cause computer 20 to issue an audible alarm. Optionally, the agent may intervene and prevent further unencrypted input from being sent to the computer, either by preventing the computer from accepting the further input or preventing the input device from transmitting it. In any case, upon receiving the alert, the user is required to flip switch 34 and then repeat step 54. Before inputting the data, the user will now check to make sure LED 36 is lit, thus indicating that keyboard 30 is operating in encrypted mode. The user may alternatively have the option of continuing in clear mode if necessary.

The mode of training described above, using negative reinforcement, may be preferable to positively prompting the user for the sake of building proper user habits: If the user were positively prompted to flip the encryption switch before inputting secret data, the user could easily become dependent on the prompt as a memory aid. Subsequently, if the prompt were turned off, due to malicious intervention by a hacker, for example, the user would be likely to forget to flip switch 34. On the other hand, the mild nuisance created by negative reinforcement in the method of Fig. 3 will encourage and accustom the user to flip the switch and observe LED 36 before inputting secret data, and will thus tend to make the user less dependent on actual prompting.

Although the description above relates to uses of embodiments of the present invention in preventing unauthorized access to unencrypted data, the architecture and methods associated with these embodiments may also be useful in enhancing the efficiency and reliability of other sorts of encryption processes. It will thus be appreciated that the embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

Embodiments of the present invention have been described with particular reference to the examples illustrated. However, it will be appreciated that variations and modifications may be made to the examples described within the scope of the present invention.

## Claims

1. A computer input device (30) for operation with a computer (26), the input device comprising:
an input transducer (32), which is coupled to receive an input from a user and to generate a data signal responsively to the input;
an encryption processor (46), which is coupled to process the data signal so as to output data to the computer, and which has a first operational mode in which the encryption processor encrypts the data signal using an encryption key not accessible to the computer so that the data are unintelligible to the computer, and a second operational mode in which the data are intelligible to the computer;
a mode switch (34), which is operative so as to switch between the first and second operational modes of the encryption processor; and
an output transducer (36), which is coupled to provide to the user an indication of whether the encryption processor is in the first or the second operational mode.

2. A device according to claim 1, wherein the input transducer comprises a text input device.

3. A device according to claim 2, wherein the text input transducer comprises a keyboard.

4. A device according to any of claims 1-3, wherein the mode switch is operable by a user of the device.

5. A device according to claim 4, wherein the mode switch comprises a manually-operable switch.

6. A device according to any of claims 1 to 5, wherein the data signal is not accessible to the computer except in the data output by the encryption processor.

7. A device according to any of claims 1 to 6, wherein the output transducer is selected from a group of devices consisting of a lamp, an alphanumeric display, and an audio transducer.

8. A device according to any of claims 1 to 7, wherein the output transducer causes a visible mode change in the input device.

9. A method for inputting data to a computer (26), the method comprising:
receiving a data signal from an input transducer (32) responsively to an input by a user;
processing the data signal so as to generate data for output to the computer using an encryption processor (46), which has a first operational mode in which the encryption processor encrypts the data signal using an encryption key not accessible to the computer so that the data are unintelligible to the computer, and a second operational mode in which the data are intelligible to the computer;
setting a mode switch (34) so as to select one of the first and second operational modes;
presenting to the user an indication of whether the encryption processor is in the first or the second operational mode; and
outputting the data to the computer in accordance with the selected one of the operational modes.

10. A method for inputting data to a computer (26), the method comprising:
receiving data input to the computer from an input device (30) operated by a user, the input device having a first user-selectable operational mode in which the input device encrypts the data input and a second user-selectable operational mode in which the data input is unencrypted;
detecting that the data input made to the computer by the user via the input device for entry in a secret data field is unencrypted; and
initiating a preventive action responsively to detecting that the data input is unencrypted.

11. A method according to claim 10, wherein initiating the preventive action comprises preventing further unencrypted data from being sent from the input device to the computer.

12. A method according to claim 10 or 11, wherein initiating the preventive action comprises issuing an alert from the computer to the user.

13. A method according to claim 12, wherein issuing the alert comprises instructing the user to switch the input device from the second to the first operational mode and repeat the data input.

14. Computing apparatus (20), comprising:
an input device (30) having a first user-selectable operational mode in which the input device encrypts data input made to the device by the user and a second user-selectable operational mode in which the data input is unencrypted; and
a computer (26), which is coupled to receive the data input from the input device, and is configured to detect that the data input made by the user for entry in a secret data field is unencrypted, and to initiate a preventive action responsively to detecting that the data input is unencrypted.

15. A computer software product, comprising a tangible computer-readable medium in which program instructions are stored, which instructions, when read by a computer (26), cause the computer to receive data input to the computer from an input device (30) operated by a user, the input device having a first user-selectable operational mode in which the input device encrypts the data input and a second user-selectable operational mode in which the data input is unencrypted, and to detect that the data input made to the computer by the user via the input device for entry in a secret data field is unencrypted, and to initiate a preventive action responsively to detecting that the data input is unencrypted.
